# FASCICULE DE BREVET EUROPEEN

(11) **EP 3 409 560 B1**
(45) Date de publication et mention de la délivrance du brevet: **21.04.2021**
(21) Numéro de dépôt: 18175290.8
(22) Date de dépôt: 31.05.2018
(51) Int. Cl.: B61G 5/10, B60L 53/18

(54) **VÉHICULE FERROVIAIRE COMPORTANT UN RÉSEAU DE DISTRIBUTION D'ÉLECTRICITÉ OPTIMISÉ**
SCHIENENFAHRZEUG, DAS EIN OPTIMIERTES STROMVERTEILUNGSNETZ UMFASST
RAILWAY VEHICLE COMPRISING AN OPTIMISED ELECTRICITY DISTRIBUTION NETWORK

(30) Priorité: 31.05.2017 FR 1754815
(43) Date de publication de la demande: 05.12.2018
(73) Titulaire: ALSTOM Transport Technologies, 93400 Saint-Ouen (FR)
(72) Inventeur: DELEMOTTE, Jean-Michel, 17390 LA TREMBLADE (FR)
(74) Mandataire: Lavoix

(56) Documents cités:
- WO-A1-2016/150852
- DE-A1- 19 705 895
- DE-A1-102006 034 303
- FR-A1- 2 982 228
- JP-A- 2012 144 230
- US-A1- 2013 221 166

## Description

La présente invention concerne un véhicule ferroviaire, comportant au moins deux voitures successives, avec un réseau de distribution d'électricité s'étendant sur ces voitures. Ces deux voitures sont habituellement séparées par un espace d'intercirculation comprenant un dispositif d'intercirculation.

Le réseau de distribution d'électricité est destiné à alimenter en électricité des équipements électriques du véhicule ferroviaire, notamment des moteurs électriques et des équipements auxiliaires tels que des systèmes d'éclairage, de chauffage, de ventilation, de climatisation, etc.

Le réseau de distribution comporte des câbles électriques haute tension HT, notamment pour l'alimentation des moteurs électriques, et des câbles électriques basse tension BT, notamment pour l'alimentation des équipements auxiliaires.

Habituellement, les câbles passent d'une voiture à l'autre à travers l'espace d'intercirculation et notamment le dispositif d'intercirculation, au niveau du pavillon. Ces câbles sont nombreux, ce qui implique un câblage complexe.

Les documents FR 2 982 228 et DE 197 05 895 montrent des exemples connus de câblages entre deux voitures successives En particulier, le document FR 2 982 228 décrit un véhicule ferroviaire comprenant deux voitures équipées de câbles électriques. Chaque voiture comporte un boîtier par lequel passent tous les câbles. Des organes de support sont placés en vis-à-vis l'un de l'autre pour supporter et guider les câbles dans le dispositif d'intercirculation entre les voitures. Toutefois, ces organes de support ne font pas partie des boîtiers et ils s'étendent dans le dispositif d'intercirculation.

L'invention a notamment pour but d'améliorer la situation, en proposant un véhicule ferroviaire dont le câblage entre deux voitures successives est simplifié et dont l'encombrement est réduit.

A cet effet, l'invention a notamment pour objet un véhicule ferroviaire, comprenant au moins des première et seconde voitures successives, telles que :
- la première voiture présente une première extrémité, et la seconde voiture présente une seconde extrémité, les première et seconde extrémités étant agencées en regard l'une de l'autre et séparées par un espace d'intercirculation comprenant un dispositif d'intercirculation,
- la première voiture est équipée de premiers câbles électriques haute tension et de premiers câbles électriques basse tension, et la seconde voiture est équipée de seconds câbles électriques haute tension et de seconds câbles électriques basse tension, caractérisé en ce que :
   - la première voiture comporte un premier boîtier porté à sa première extrémité, les premiers câbles électriques haute tension et basse tension passant tous par ce premier boîtier, le premier boîtier comprenant un premier organe de support et de guidage des câbles électriques haute tension et basse tension,
   - la seconde voiture comporte un second boîtier porté à sa seconde extrémité, les seconds câbles électriques haute tension et basse tension passant tous par ce second boîtier, le second boîtier comprenant un second organe de support et de guidage des câbles électriques haute tension et basse tension,
   - les premier et second organes de support sont agencés l'un en regard de l'autre, les câbles électriques s'étendant librement dans l'espace d'intercirculation entre les premier et second organes de support, l'espace d'intercirculation et notamment le dispositif d'intercirculation étant dépourvu de tout élément de support pour les câbles électriques.

L'invention permet de disposer de nombreux câbles de manière simple et ordonnée, sans générer de contraintes sur les câbles lors de débattements entre les voitures, les câbles s'étendant librement dans le l'espace d'intercirculation.

Un véhicule ferroviaire selon l'invention peut comporter en outre l'une ou plusieurs des caractéristiques suivantes, prises seules ou selon toutes combinaisons techniquement envisageables.
- Le premier organe de support comporte une pluralité de premiers orifices de guidage, chacun pour le guidage d'un premier câble respectif, chaque premier orifice de guidage étant orienté vers le bas dans une direction longitudinale, dans un premier sens allant depuis le premier organe de support vers le second organe de support.
- Le second organe de support comporte une pluralité de seconds orifices de guidage, chacun pour le guidage d'un second câble respectif, chaque second orifice de guidage étant orienté vers le bas dans une direction longitudinale, dans un second sens allant depuis le second organe de support vers le premier organe de support.
- Le premier organe de support est formé par une paroi du premier boîtier, et/ou le second organe de support et de guidage est formé par une paroi du second boîtier.
- Le premier organe de support comporte des premiers connecteurs pour les premiers câbles haute tension et/ou basse tension, le second organe de support comporte des seconds connecteurs pour les seconds câbles haute tension et/ou basse tension, et des câbles intermédiaires s'étendent entre les premier et second organes de support, chaque câble intermédiaire étant connecté à l'un respectif des premiers câbles et à l'un respectif des seconds câbles.
- Au moins certains câbles, notamment les câbles électriques basse tension, s'étendent sur les deux voitures, et en d'autres termes sont communs aux deux voitures.
- Chaque boîtier s'étend transversalement à la voiture correspondante, sensiblement sur toute la largeur de cette voiture, ce boîtier comportant deux parois transversales, séparées dans une direction longitudinale, et un couvercle refermant le boîtier (28, 30) vers le haut et de préférence également sur les côtés.
- Chaque voiture comporte une caisse respective comprenant une toiture respective, chaque boîtier étant porté intégralement par la toiture de la caisse correspondante.
- Chaque organe de support comporte une partie de support des câbles haute tension correspondants, et une partie de support des câbles basse tension correspondants, ces parties étant distinctes.

L'invention sera mieux comprise à la lecture de la description qui va suivre, donnée uniquement à titre d'exemple et faite en se référant aux figures annexées, parmi lesquelles :
- la figure 1 est une vue en perspective partielle d'un véhicule ferroviaire selon un exemple de mode de réalisation de l'invention, au niveau d'une intercirculation entre deux voitures successives du véhicule ferroviaire ;
- la figure 2 est une vue de face d'un organe de support de câbles équipant le véhicule ferroviaire de la figure 1.

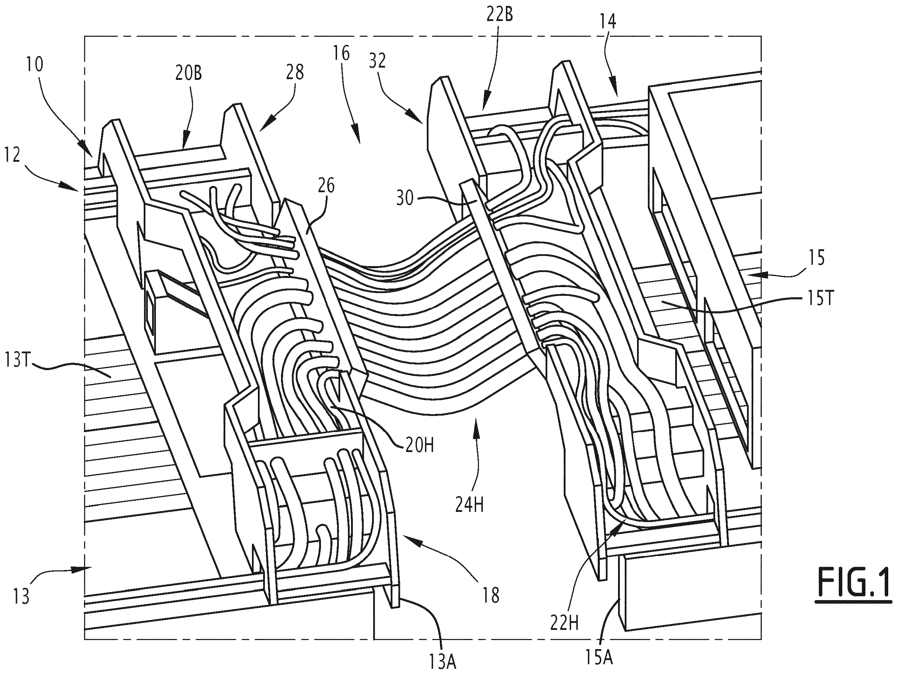

On a représenté, sur la figure 1, un véhicule ferroviaire désigné par la référence générale 10.

Le véhicule ferroviaire 10 comprend au moins deux voitures, notamment une première voiture 12 et une seconde voiture 14 adjacentes, séparées de manière classique par un espace d'intercirculation 16 comprenant un dispositif d'intercirculation.

Le véhicule ferroviaire 10 comporte par exemple d'autres voitures non représentées, toutes les voitures adjacentes étant avantageusement reliées ensemble de la même manière que les première 12 et seconde 14 voitures.

La première voiture 12 comporte une première caisse 13 comprenant une première toiture 13T et s'étendant dans une direction longitudinale jusqu'à une première extrémité 13A.

De même, la seconde voiture 14 comporte une seconde caisse 15 comprenant une seconde toiture 15T et s'étendant dans une direction longitudinale jusqu'à une seconde extrémité 15A.

Les première 13A et seconde 15A extrémités sont disposées l'une en regard de l'autre.

Le dispositif d'intercirculation comporte de manière classique des moyens de liaison mécanique des première 12 et seconde 14 voitures ensemble, pour assurer la cohésion du véhicule ferroviaire 10, tout en autorisant des rotations relatives des première 12 et seconde 14 voiture, pour le passage des courbes, des creux et des bosses de la voie ferrée.

Le véhicule ferroviaire 10 comporte un réseau 18 de distribution d'électricité s'étendant le long de ce véhicule ferroviaire, notamment sur la première voiture 12 et sur la seconde voiture 14. Le réseau de distribution 18 est destiné à distribuer de l'électricité le long du véhicule ferroviaire 10 pour l'alimentation électrique d'équipements électriques du véhicule ferroviaire 10, en particulier des moteurs électriques assurant classiquement la traction du véhicule 10, et d'équipements auxiliaires tels que des systèmes d'éclairage, des systèmes d'affichage, des systèmes de climatisation, etc.

Plus particulièrement, la première voiture 12 comporte des premiers câbles électriques de distribution d'électricité, comprenant des premiers câbles électriques haute tension 20H et des premiers câbles électriques basse tension 20B, et la seconde voiture 14 comporte des seconds câbles électriques, comprenant des seconds câbles électriques haute tension 22H et des seconds câbles électriques basse tension 22B.

Par exemple, au moins certains câbles, notamment les câbles électriques basse tension 20B, 22B, s'étendent sur les deux voitures 12, 14, et en d'autres termes sont communs aux deux voitures 12, 14.

En revanche, au moins certains câbles, notamment les câbles électriques haute tension 20H, 22H, sont connectés entre eux au moyen de câbles intermédiaires haute tension 24H qui s'étendent dans l'espace d'intercirculation 16, et qui seront décrits ultérieurement plus en détail. Plus particulièrement, chaque premier câble haute tension 20H est relié à l'un respectif des seconds câbles haute tension 22H, par l'intermédiaire d'un câble intermédiaire respectif 24H.

Les premiers 20H, 20B et seconds 22H, 22B câbles connectés entre eux forment ensemble le réseau de distribution 18.

Conformément à une variante, les câbles électriques haute tension 20H, 22H sont directement connectés entre eux sans intermédiaire. Conformément à une autre variante, les câbles électriques haute tension s'étendent sur les deux voitures 12, 14, et en d'autres termes sont communs aux deux voitures 12, 14.

Conformément à l'invention, la première voiture 12 porte, à proximité de sa première extrémité 13A, un premier organe 26 de support et de guidage des premiers câbles électriques haute tension 20H et basse tension 20B.

Avantageusement, la première voiture 12 comporte un premier boîtier 28 porté à sa première extrémité 13A, les premiers câbles électriques haute tension 20H et basse tension 20B passant tous par ce premier boîtier 28. En regroupant la haute tension et la basse tension dans un même boîtier, on facilite la mise en oeuvre du réseau de distribution 18, notamment en ce qui concerne le montage, le démontage, la maintenance, etc.

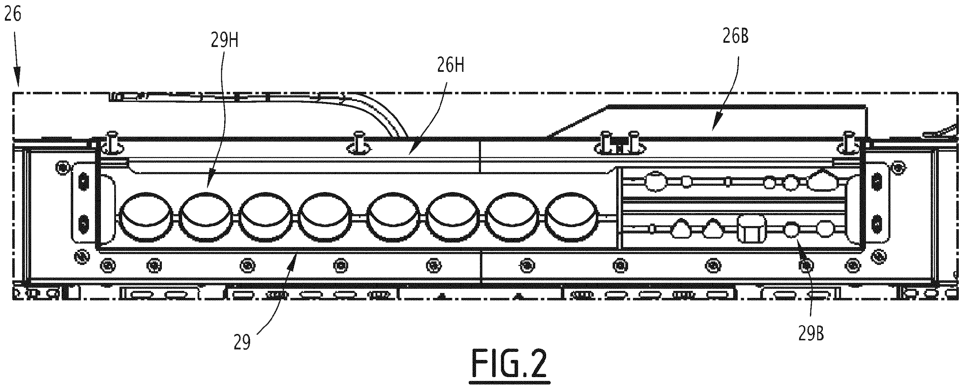

Le premier boîtier 28 s'étend transversalement à la première voiture 12, sensiblement sur toute la largeur de cette première voiture 12. Le premier boîtier 28 comporte notamment deux parois transversales, séparées dans la direction longitudinale, et un couvercle (non représenté sur la figure) refermant le premier boîtier 28 vers le haut et de préférence également sur les côtés. L'une des parois transversales est formée par le premier organe de support 26, qui est représenté plus en détail sur la figure 2.

Le premier boîtier 28, en particulier le premier organe de support 26, est porté intégralement par la toiture 13T de la première caisse 13.

Le premier organe de support 26 comporte une pluralité de premiers orifices de guidage 29, chacun pour le guidage d'un premier câble 20H, 20B respectif. Chaque premier orifice de guidage 29 est orienté vers le bas dans la direction longitudinale, dans un premier sens allant depuis la première voiture 12 vers la seconde voiture 14. Ainsi, les câbles sont guidés vers le bas au sortir du premier organe de support 26, dans l'espace d'intercirculation 16, comme cela est représenté sur la figure 1.

Le premier organe de support 26 comporte une partie 26H de support des premiers câbles haute tension 20H, et une partie 26B de support des premiers câbles basse tension 20B, les parties 26H et 26B étant distinctes.

Les premiers orifices de guidage 29 comportent des orifices de guidage haute tension 29H, ménagés dans la partie 26H de support des premiers câbles haute tension 20H, et des orifices de guidage basse tension 29B, ménagés dans la partie 26B de support des premiers câbles basse tension 20B.

Chaque orifice de guidage haute tension 29H est par exemple destiné à recevoir un connecteur haute tension, propre à être connecté d'une part à l'un des premiers câbles haute tension 20H, du côté du premier boîtier 28, et d'autre part à l'un des câbles intermédiaires 24H du côté de l'espace d'intercirculation 16.

Par ailleurs, chaque orifice de guidage basse tension 29B est par exemple destiné au passage des câbles basse tension 20B, 22B.

En variante, au moins certains câbles, notamment les câbles électriques basse tension 20B, 22B, sont connectés entre eux au moyen de câbles intermédiaires basse tension qui s'étendent dans l'espace d'intercirculation 16. Dans cette variante, chaque orifice de guidage basse tension 29B est par exemple destiné à recevoir un connecteur haute tension, propre à être connecté d'une part à l'un des premiers câbles basse tension 20B, du côté du premier boîtier 28, et d'autre part à l'un des câbles intermédiaires basse tension du côté de l'espace d'intercirculation 16.

La seconde voiture 14 porte, à proximité de sa seconde extrémité 15A, un second organe 30 de support et de guidage des seconds câbles électriques haute tension 22H et basse tension 22B.

Avantageusement, la seconde voiture 14 comporte un second boîtier 32 porté à sa seconde extrémité 15A, les seconds câbles électriques haute tension 22H et basse tension 22B passant tous par ce second boîtier 32. En regroupant la haute tension et la basse tension dans un même boîtier, on facilite la mise en oeuvre du réseau de distribution 18, notamment en ce qui concerne le montage, démontage, maintenance, etc.

Le second boîtier 32 s'étend transversalement à la seconde voiture 14, sensiblement sur toute la largeur de cette seconde voiture 14. Le second boîtier 32 comporte notamment deux parois transversales, séparées dans la direction longitudinale, et un couvercle (non représenté sur la figure) refermant le second boîtier 32 vers le haut et de préférence également sur les côtés. L'une des parois transversales est formée par le second organe de support 30.

Le second boîtier 32, en particulier le second organe de support 30, est porté intégralement par la toiture 15T de la seconde caisse 15.

Le second organe de support 30 est similaire en tout point au premier organe de support 26.

En particulier, le premier organe de support 30 comporte une pluralité de seconds orifices de guidage, chacun pour le guidage d'un second câble 22H, 22B respectif. Chaque second orifice de guidage est orienté vers le bas dans la direction longitudinale, dans un second sens allant depuis la seconde voiture 14 vers la première voiture 12. Ainsi, les câbles sont guidés vers le bas au sortir du second organe de support 30, dans l'espace d'intercirculation 16, comme cela est représenté sur la figure 1.

De manière similaire au premier organe de support 26, le second organe de support 30 comporte une partie de support des seconds câbles haute tension 22H, et une partie de support des seconds câbles basse tension 22B.

Les seconds orifices de guidage comportent des orifices de guidage haute tension, ménagés dans la partie de support des seconds câbles haute tension 22H, et des orifices de guidage basse tension, ménagés dans la partie de support des seconds câbles basse tension 22B.

Chaque orifice de guidage haute tension est par exemple destiné à recevoir un connecteur haute tension, propre à être connecté d'une part à l'un des seconds câbles haute tension 22H, du côté du second boîtier 32, et d'autre part à l'un des câbles intermédiaires 24H du côté de l'espace d'intercirculation 16.

Par ailleurs, chaque orifice de guidage basse tension est par exemple destiné au passage des câbles basse tension 20B, 22B.

Le second organe de support 30 est agencé en regard du premier organe de support 26, de manière symétrique, si bien que la partie haute tension 26H du premier organe de support 26 est agencée en regard de la partie haute tension du second organe de support 30, et que la partie basse tension 26B du premier organe de support 26 est agencée en regard de la partie basse tension du second organe de support 30.

Dans l'exemple représenté sur la figure 1, chaque premier câble haute tension 20H est connecté à un second câble haute tension 22H situé en regard. En variante, les câbles sont croisés et sont donc connectés à des câbles qui ne sont pas en regard.

Conformément à l'invention, les câbles électriques, notamment les câbles basse tension 20B, 22B et les câbles intermédiaires 24H, s'étendent librement dans l'espace d'intercirculation 16 entre les premier 26 et second 30 organes de support, l'espace d'intercirculation 16 et notamment le dispositif d'intercirculation étant dépourvu de tout élément de support pour les câbles électriques. En d'autres termes, les seuls éléments de support sont formés par les organes de support 26, 30, qui ne sont pas portés par des éléments de l'espace d'intercirculation 16 et notamment du dispositif d'intercirculation, mais par la caisse 13, 15 respective.

Ainsi, les câbles ne sont sujets à aucune contrainte lors des débattements entre les première et seconde voitures.

En outre, puisque le dispositif d'intercirculation ne porte pas d'élément de support, l'invention peut être employée de manière standardisée quel que soit le type de dispositif d'intercirculation.

On notera que l'invention n'est pas limitée au mode de réalisation précédemment décrit, et pourrait présenter diverses variantes complémentaires.

## Revendications

1. Véhicule ferroviaire (10), comprenant au moins des première (12) et seconde (14) voitures successives, telles que :
- la première voiture (12) présente une première extrémité (13A), et la seconde voiture (14) présente une seconde extrémité (15A), les première (13A) et seconde (15A) extrémités étant agencées en regard l'une de l'autre et séparées par un espace d'intercirculation (16) comprenant un dispositif d'intercirculation,
- la première voiture (12) est équipée de premiers câbles électriques haute tension (20H) et de premiers câbles électriques basse tension (20B), et la seconde voiture (14) est équipée de seconds câbles électriques haute tension (22H) et de seconds câbles électriques basse tension (22B),
- la première voiture (12) comporte un premier boîtier (28) porté à sa première extrémité (13A), les premiers câbles électriques haute tension (20H) et basse tension (20B) passant tous par ce premier boîtier (28), le premier boîtier (28) comprenant un premier organe (26) de support et de guidage des câbles électriques haute tension (20H) et basse tension (20B),
- la seconde voiture (14) comporte un second boîtier (32) porté à sa seconde extrémité, les seconds câbles électriques haute tension (22H) et basse tension (22B) passant tous par ce second boîtier (32), le second boîtier (32) comprenant un second organe (30) de support et de guidage des câbles électriques haute tension (22H) et basse tension (22B),
- les premier (26) et second (30) organes de support sont agencés l'un en regard de l'autre, les câbles électriques s'étendant librement dans l'espace d'intercirculation (16) entre les premier (26) et second (30) organes de support, l'espace d'intercirculation (16) et notamment le dispositif d'intercirculation étant dépourvu de tout élément de support pour les câbles électriques.

2. Véhicule ferroviaire (10) selon la revendication 1, dans lequel le premier organe de support (26) comporte une pluralité de premiers orifices de guidage (29), chacun pour le guidage d'un premier câble (20H ; 20B) respectif, chaque premier orifice de guidage (29) étant orienté vers le bas dans une direction longitudinale, dans un premier sens allant depuis le premier organe de support (26) vers le second organe de support (30).

3. Véhicule ferroviaire (10) selon la revendication 1 ou 2, dans lequel le second organe de support (30) comporte une pluralité de seconds orifices de guidage, chacun pour le guidage d'un second câble (22H ; 22B) respectif, chaque second orifice de guidage étant orienté vers le bas dans une direction longitudinale, dans un second sens allant depuis le second organe de support (30) vers le premier organe de support (26).

4. Véhicule ferroviaire (10) selon l'une quelconque des revendications précédentes, dans lequel :
- le premier organe de support (26) est formé par une paroi du premier boîtier (28), et/ou
- le second organe de support (30) est formé par une paroi du second boîtier (32).

5. Véhicule ferroviaire (10) selon l'une quelconque des revendications précédentes, dans lequel :
- le premier organe de support (26) comporte des premiers connecteurs pour les premiers câbles haute tension (20H) et/ou basse tension (20B),
- le second organe de support (30) comporte des seconds connecteurs pour les seconds câbles haute tension (22H) et/ou basse tension (22B),
- des câbles intermédiaires (24H) s'étendent entre les premier (26) et second (30) organes de support, chaque câble intermédiaire (24H) étant connecté à l'un respectif des premiers câbles (20H ; 20B) et à l'un respectif des seconds câbles (22H ; 22B).

6. Véhicule ferroviaire (10) selon l'une quelconque des revendications précédentes, dans lequel au moins certains câbles électriques, notamment les câbles électriques basse tension (20B, 22B), s'étendent sur les deux voitures (12, 14), et en d'autres termes sont communs aux deux voitures (12, 14).

7. Véhicule ferroviaire (10) selon l'une quelconque des revendications précédentes, dans lequel chaque boîtier (28, 30) s'étend transversalement à la voiture (12, 14) correspondante, sensiblement sur toute la largeur de cette voiture (12, 14), ce boîtier (28, 30) comportant deux parois transversales, séparées dans une direction longitudinale, et un couvercle refermant le boîtier (28, 30) vers le haut et de préférence également sur les côtés.

8. Véhicule ferroviaire (10) selon l'une quelconque des revendications précédentes, dans lequel chaque voiture (12, 14) comporte une caisse respective (13, 15) comprenant une toiture (13T, 15T) respective, chaque boîtier (28, 30) étant porté intégralement par la toiture (13T, 15T) de la caisse correspondante (13, 15).

9. Véhicule ferroviaire (10) selon l'une quelconque des revendications précédentes, dans lequel chaque organe de support (26, 30) comporte une partie (26H) de support des câbles haute tension (20H, 22H) correspondants, et une partie (26B) de support des câbles basse tension (20B, 22H) correspondants, ces parties (26H, 26B) étant distinctes.

## Patentansprüche

1. Schienenfahrzeug (10), welches mindestens einen ersten (12) und zweiten (14) aufeinanderfolgenden Wagen derart aufweist, dass:
- der erste Wagen (12) ein erstes Ende (13A) aufweist und der zweite Wagen (14) ein zweites Ende (15A) aufweist, wobei das erste (13A) und das zweite (15A) Ende einander gegenüberliegend angeordnet sind und durch einen Übergangsraum (16), welcher eine Übergangsvorrichtung aufweist, getrennt sind,
- der erste Wagen (12) mit ersten elektrischen Hochspannungskabeln (20H) und ersten elektrischen Niedrigspannungskabeln (20B) versehen ist und der zweite Wagen (14) mit zweiten elektrischen Hochspannungskabeln (22H) und zweiten elektrischen Niedrigspannungskabeln (22B) versehen ist,
- der erste Wagen (12) ein an dessen ersten Ende (13A) gehaltenes, erstes Gehäuse (28) aufweist, wobei die ersten elektrischen Hochspannungs- (20H) und Niedrigspannungskabel (20B) alle durch dieses erste Gehäuse (28) verlaufen, wobei das erste Gehäuse (28) ein erstes Organ (26) zum Abstützen und zum Führen der elektrischen Hochspannungs- (20H) und Niedrigspannungskabel (20B) aufweist,
- der zweite Wagen (14) ein an dessen zweiten Ende (15A) gehaltenes, zweites Gehäuse (32) aufweist, wobei die zweiten elektrischen Hochspannungs- (22H) und Niedrigspannungskabel (22B) alle durch dieses zweite Gehäuse (32) verlaufen, wobei das zweite Gehäuse (32) ein zweites Organ (30) zum Abstützen und zum Führen der elektrischen Hochspannungs- (20H) und Niedrigspannungskabel (20B) aufweist,
- das erste (26) und das zweite (30) Organ zum Abstützen einander gegenüberliegend angeordnet sind, wobei die elektrischen Kabel sich frei in dem Übergangsraum (16) zwischen dem ersten (26) und dem zweiten (30) Organ zum Abstützen erstrecken, wobei der Übergangsraum (16) und insbesondere die Übergangsvorrichtung frei von jeglichem Element zum Abstützen für die elektrischen Kabel ist.

2. Schienenfahrzeug (10) gemäß dem Anspruch 1, wobei das erste Organ zum Abstützen (26) eine Mehrzahl von ersten Führungsöffnungen (29) aufweist, jede davon für die Führung eines jeweiligen ersten Kabels (20H; 20B), wobei jede erste Führungsöffnung (29) in einer Längsrichtung nach unten in einer ersten, von dem ersten Organ zum Abstützen (26) aus zum zweiten Organ zum Abstützen (30) hin verlaufenden Richtung ausgerichtet ist.

3. Schienenfahrzeug (10) gemäß dem Anspruch 1 oder 2, wobei das zweite Organ zum Abstützen (30) eine Mehrzahl von ersten Führungsöffnungen aufweist, jede davon für die Führung eines jeweiligen zweiten Kabels (22H; 22B), wobei jede zweite Führungsöffnung in einer Längsrichtung nach unten in einer zweiten, von dem zweiten Organ zum Abstützen (30) aus zum ersten Organ zum Abstützen (26) hin verlaufenden Richtung ausgerichtet ist.

4. Schienenfahrzeug (10) gemäß irgendeinem der vorhergehenden Ansprüche, wobei:
- das erste Organ zum Abstützen (26) durch eine Wand des ersten Gehäuses (28) gebildet ist, und/oder
- das zweite Organ zum Abstützen (30) durch eine Wand des zweiten Gehäuses (32) gebildet ist.

5. Schienenfahrzeug (10) gemäß irgendeinem der vorhergehenden Ansprüche, wobei:
- das erste Organ zum Abstützen (26) erste Verbinder für die ersten Hochspannungs- (20H) und/oder Niedrigspannungskabel (20B) aufweist,
- das zweite Organ zum Abstützen (30) zweite Verbinder für die zweiten Hochspannungs- (22H) und/oder Niedrigspannungskabel (22B) aufweist,
- Zwischenkabel (24H) sich zwischen dem ersten (26) und dem zweiten (30) Organ zum Abstützen erstrecken, wobei jedes Zwischenkabel (24H) mit einem jeweiligen der ersten Kabel (20H; 20B) und mit einem jeweilige der zweiten Kabel (22H; 22B) verbunden ist.

6. Schienenfahrzeug (10) gemäß irgendeinem der vorhergehenden Ansprüche, wobei sich zumindest bestimmte elektrische Kabel, insbesondere die elektrischen Niedrigspannungskabel (20B, 22B), über die zwei Wägen (12, 14) erstrecken und, mit anderen Worten, von den zwei Wägen (12, 14) geteilt werden.

7. Schienenfahrzeug (10) gemäß irgendeinem der vorhergehenden Ansprüche, wobei jedes Gehäuse (28, 30) sich quer zu dem zugehörigen Wagen (12, 14), im Wesentlichen über die gesamte Breite des Wagens (12, 14), erstreckt, wobei jenes Gehäuse (28, 30) zwei Querwände, welche in einer Längsrichtung voneinander getrennt sind, und einen Deckel, welcher das Gehäuse (28, 30) nach oben hin wieder abschließt, aufweist.

8. Schienenfahrzeug (10) gemäß irgendeinem der vorhergehenden Ansprüche, wobei jeder Wagen (12, 14) einen jeweiligen Wagenkasten (13, 15) aufweist, welcher ein jeweiliges Dach (13T, 15T) aufweist, wobei jedes Gehäuse (28, 30) vollständig durch das Dach (13T, 15T) des zugehörigen Wagenkastens (13, 15) getragen wird.

9. Schienenfahrzeug (10) gemäß irgendeinem der vorhergehenden Ansprüche, wobei jedes Organ zum Abstützen (26, 30) einen Abschnitt (26H) zum Abstützen der korrespondierenden Hochspannungskabel (20H, 22H) und einen Abschnitt (26B) zum Abstützen der korrespondierenden Niedrigspannungskabel (20B, 22B) aufweist, wobei die Abschnitte (26H, 26B) voneinander verschieden sind.

## Claims

1. A railway vehicle (10), comprising at least first (12) and second (14) successive cars, such that:
- the first car (12) has a first end (13A), and the second car (14) has a second end (15A), the first (13A) and second (15A) ends being arranged across from one another and separated by an inter-circulation space (16) comprising an inter-circulation device,
- the first car (12) is equipped with first high-voltage power cables (20H) and first low-voltage power cables (20B), and the second car (14) is equipped with second high-voltage power cables (22H) and second low-voltage power cables (22B),
- the first car (12) includes a first casing (28) supported at its first end (13A), the first high-voltage (20H) and low-voltage (20B) power cables all passing through this first casing (28), the first casing (28) comprising a first support and guide member (26) for the high-voltage (20H) and low-voltage (20B) power cables,
- the second car (14) includes a second casing (32) supported at its second end, the second high-voltage (22H) and low-voltage (22B) power cables all passing through this second casing (32), the second casing (32) comprising a second support and guide member (30) for the high-voltage (22H) and low-voltage (22B) power cables,
- the first (26) and second (30) support members are arranged across from one another, the power cables extending freely in the inter-circulation space (16) between the first (26) and second (30) support members, the inter-circulation space (16) and in particular the inter-circulation device being free of any support element for the power cables.

2. The railway vehicle (10) according to claim 1, wherein the first support member (26) includes a plurality of first guide orifices (29), each for guiding a first respective cable (20H; 20B), each first guide orifice (29) being oriented downward in a longitudinal direction, in a first sense going from the first support member (26) toward the second support member (30).

3. The railway vehicle (10) according to claim 1 or 2, wherein the second support member (30) includes a plurality of second guide orifices, each for guiding a second respective cable (22H; 22B), each second guide orifice being oriented downward in a longitudinal direction, in a second sense going from the second support member (30) toward the first support member (26).

4. The railway vehicle (10) according to any one of the preceding claims, wherein:
- the first support member (26) is formed by a wall of the first casing (28), and/or
- the second support member (30) is formed by a wall of the second casing (32).

5. The railway vehicle (10) according to any one of the preceding claims, wherein:
- the first support member (26) has first connectors for the first high-voltage (20H) and/or low-voltage (20B) cables,
- the first support member (30) has first connectors for the first high-voltage (22H) and/or low-voltage (22B) cables,
- intermediate cables (24H) extend between the first (26) and second (30) support members, each intermediate cable (24H) being connected to the respective one of the first cables (20H; 20B) and to the respective one of the second cables (22H; 22B).

6. The railway vehicle (10) according to any one of the preceding claims, wherein at least some power cables, in particular the low-voltage power cables (20B, 22B), extend over the two cars (12, 14), and in other words are shared by the two cars (12, 14).

7. The railway vehicle (10) according to any one of the preceding claims, wherein each casing (28, 30) extends transversely to the corresponding car (12, 14), substantially over the entire width of this car (12, 14), this casing (28, 30) having two transverse walls, separated in a longitudinal direction, and a cover closing the casing (28, 30) upwardly and preferably also on the sides.

8. The railway vehicle (10) according to any one of the preceding claims, wherein each car (12, 14) has a respective body (13, 15) comprising a respective roof (13T, 15T), each casing (28, 30) being supported completely by the roof (13T, 15T) of the corresponding body (13, 15).

9. The railway vehicle (10) according to any one of the preceding claims, wherein each support member (26, 30) has a support part (26H) for the corresponding high-voltage cables (20H, 22H), and a support part (26B) for the corresponding low-voltage cables (20B, 22H), these parts (26H, 26B) being separate.
